(19) Europäisches Patentamt
European Patent Office
Office européen des brevets

(11) **EP 3 174 396 B1**

(12) **EUROPEAN PATENT SPECIFICATION**

(45) Date of publication and mention
of the grant of the patent:
**11.03.2020 Bulletin 2020/11**

(21) Application number: **15747322.4**

(22) Date of filing: **23.07.2015**

(51) Int Cl.:
*A01N 33/04* (2006.01)     *A01N 33/20* (2006.01)
*A01P 1/00* (2006.01)      *C02F 1/20* (2006.01)
*C02F 1/00* (2006.01)      *C09K 8/50* (2006.01)
*C09K 8/00* (2006.01)      *C09K 8/035* (2006.01)

(86) International application number:
**PCT/US2015/041770**

(87) International publication number:
**WO 2016/018718 (04.02.2016 Gazette 2016/05)**

(54) **SYNERGISTIC ANTIMICROBIAL COMPOSITION**

SYNERGISTISCHE ANTIMIKROBIELLE ZUSAMMENSETZUNG

COMPOSITION ANTIMICROBIENNE SYNERGIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.07.2014 US 201462030842 P**

(43) Date of publication of application:
**07.06.2017 Bulletin 2017/23**

(73) Proprietors:
• **Dow Chemical IMEA GmbH**
  **8810 Horgen (CH)**
• **Dow Global Technologies LLC**
  **Midland, MI 48674 (US)**

(72) Inventors:
• **SIANAWATI, Emerentiana**
  **Collegeville, PA 19426 (US)**
• **SINGLETON, Freddie L.**
  **Midland, MI 48674 (US)**
• **NAIR, Subhash**
  **Dubai 7893 (AE)**

(74) Representative: **Houghton, Mark Phillip et al Patent Outsourcing Limited
Corner House
1 King Street
Bakewell
Derbyshire DE45 1DZ (GB)**

(56) References cited:
EP-A1- 2 454 941        WO-A1-2011/016909
WO-A1-2015/051204       WO-A2-2011/038318
JP-A- 2004 123 617

Remarks:
The file contains technical information submitted after the application was filed and not included in this specification

**Description**

This invention relates to combinations of biocides, the combinations having greater activity than would be observed for the individual antimicrobial compounds.

Use of combinations of at least two antimicrobial compounds can broaden potential markets, reduce use concentrations and costs, and reduce waste. In some cases, commercial antimicrobial compounds cannot provide effective control of microorganisms, even at high use concentrations, due to weak activity against certain types of microorganisms, or relatively slow antimicrobial action, or instability under certain conditions such as high temperature and high pH. Combinations of different antimicrobial compounds are sometimes used to provide overall control of microorganisms or to provide the same level of microbial control at lower use rates in a particular end-use environment. For example, U.S. Pat. No. 5,385,896 discloses combinations of phosphonium salts and aldehydes, but this reference does not suggest any of the combinations claimed herein. JP-A-2004 123617 discloses a microbe-controlling agent comprising a bis-quaternary ammonium salt compound and a nitroalkanediol. Moreover, there is a need for additional combinations of antimicrobial compounds having enhanced activity to provide effective control of microorganisms. The problem addressed by this invention is to provide such combinations of antimicrobial compounds.

STATEMENT OF THE INVENTION

The present invention is directed to a synergistic antimicrobial composition comprising: (a) tris(hydroxymethyl)nitromethane (THNM) and (b) a quaternary ammonium compound (QAC); wherein the QAC is selected from the group consisting of N-alkyl (50% C14, 40% C12, 10% C16) dimethylbenzyl ammonium chloride, didecyl dimethyl ammonium chloride, benzalkonium chloride or polixetonium chloride;
and wherein
when the QAC is N-alkyl (50% C14, 40% C12, 10% C16) dimethylbenzyl ammonium chloride, the weight ratio of THNM:QAC is from 80:1 to 1:1.6;
when the QAC is didecyl dimethyl ammonium chloride, the weight ratio of THNM:QAC is from 80:1 to 1:13;
when the QAC is benzalkonium chloride, the weight ratio of THNM:QAC is from 160:1 to 1:13;
when the QAC is polixetonium chloride, the weight ratio of THNM:QAC is from 80:1 to 1:13.

DETAILED DESCRIPTION OF THE INVENTION

As used herein, the following terms have the designated definitions, unless the context clearly indicates otherwise. The term "antimicrobial compound" refers to a compound capable of inhibiting the growth or propagation of microorganisms, and/or killing microorganisms; antimicrobial compounds include bactericides, bacteristats, fungicides, fungistats, algaecides and algistats, depending on the dose level applied, system conditions and the level of microbial control desired. The term "microorganism" includes, for example, fungi (such as yeast and mold), bacteria, archaea, and algae. The following abbreviations are used throughout the specification: ppm = parts per million by weight (weight/weight), mL = milliliter. Unless otherwise specified, temperatures are in degrees centigrade (°C), and references to percentages are by weight (wt. %). Percentages of antimicrobial compounds in the composition of this invention are based on the total weight of active ingredients in the composition, i.e., the antimicrobial compounds themselves, exclusive of any amounts of solvents, carriers, dispersants, stabilizers or other materials which may be present.

As used herein, quaternary ammonium compounds (QAC) are positively charged polyatomic ions of the structure $NR_4^+$ with R being hydrogen, alkyl, alkylether or aryl groups, or salts thereof. The R groups may also be connected. The quaternary ammonium compound is selected from the group consisting of N-alkyl (50% C14, 40% C12, 10% C16) dimethyl benzyl ammonium chloride (ADBAC), didecyl ammonium chloride (DDAC), benzalkonium chloride (benzyl-C8-18-alkyldimethyl, chlorides) (BKC), and polixetonium chloride (poly (oxyethylene (dimethyliminio) ethylene (dimethyliminio) ethylene dichloride)(POLYQUAT). More than one quaternary ammonium compound may be present, in which case the biocide ratio is calculated from the total content of such compounds.

In some embodiments of the invention, a weight ratio of the tris(hydroxymethyl)nitromethane (THNM) to quaternary ammonium compound is from 160:1 to 1:13, alternatively from 80:1 to 1:13, alternatively from 80:1 to 1:1.6, alternatively from 40:1 to 10:1, alternatively from 40:1 to 1:3.2, alternatively from 40:1 to 1:13, alternatively from 20:1 to 2.5:1, alternatively from 20:1 to 1:3.2, and alternatively from 20:1 to 1:1.6. In some embodiments of the invention, the composition is used to prevent microbial growth in a medium at higher temperatures and high sulfide levels, i.e., at least 32°C and 2 ppm sulfide, alternatively at least 50°C and 2 ppm sulfide conditions which typically are present in oil and gas wells and reservoirs. In these embodiments, the weight ratio of the tris(hydroxymethyl)nitromethane to quaternary ammonium compound is from 160:1 to 1:13; alternatively from 80:1 to 1:1.6; and alternatively from 40:1 to 1:13. In some embodiments of the invention, a higher temperature and high-sulfide medium is one having a temperature at least 32°C and a sulfide level at least 4 ppm. In some embodiments, the temperature is at least 60°C, alternatively at least 65°C;

alternatively at least 70°C; alternatively at least 75°C; alternatively at least 80°C. In some embodiments, the medium contains at least 5 ppm sulfide, alternatively at least 6 ppm sulfide, alternatively at least 7 ppm sulfide, alternatively at least 8 ppm sulfide, alternatively at least 9 ppm sulfide, alternatively at least 10 ppm sulfide. In some embodiments of the invention, the medium to which the antimicrobial composition is added is anaerobic. In some embodiments of the invention, the anaerobic medium is in a high-temperature and high-sulfide environment. In some embodiments of the invention, the medium to which the antimicrobial composition is added contains sulfate-reducing bacteria. In some embodiments of the invention, the medium to which the antimicrobial composition is added contains acid-producing bacteria. In some embodiments of the invention, the high-temperature and high-sulfide environment contains sulfate-reducing bacteria. In some embodiments of the invention, the medium to which the antimicrobial composition is added is an aqueous medium, i.e., one comprising at least 60% water, alternatively at least 80% water. In some embodiments of the invention, the aqueous medium is a high-temperature and high-sulfide medium.

In some embodiments of the invention, the antimicrobial combination of this invention is useful for inhibiting microbial growth in different media. The term media is defined as matrices and/or habitats in which microorganisms survive and/or grow. Examples of suitable medium media include oil and gas field injection, produced fluids, fracturing fluids, hydro-testing fluids, work-over fluids, and functional fluids, oil and gas wells, oil and gas operation, separation, storage, and transportation systems, oil and gas pipelines, oil and gas vessels, and fuel. The combination is especially useful in media such as aqueous fluids added to or produced by oil and gas well. The composition also is useful for controlling microorganisms in other industrial water and water containing/contaminated media, such as cooling water, air washer, heat exchangers, boiler water, pulp and paper mill water, other industrial process water media such as: ballast water, wastewater, metalworking fluids, latex, paint, coatings, adhesives, inks, tape joint compounds, pigment, water-based slurries, personal care and household products such as detergent, filtration systems (including reverse osmosis and ultrafiltration systems), toilet bowel, textiles, leather and leather production system, or a system used therewith.

Typically, the amount of the biocide combinations of the present invention to control the growth of microorganisms is from 10 ppm to 5,000 ppm active ingredient. In some embodiments of the invention, the active ingredients of the composition are present in an amount of at least 20 ppm, alternatively at least 50 ppm, alternatively at least 100 ppm, alternatively at least 150 ppm, alternatively at least 200 ppm. In some embodiments, the active ingredients of the composition are present in an amount of no more than 2,000 ppm, alternatively no more than 1,000 ppm, alternatively no more than 500 ppm, alternatively no more than 400 ppm, alternatively no more than 300 ppm, alternatively no more than 250 ppm, alternatively no more than 200 ppm, alternatively no more than 100 ppm, alternatively no more than 50 ppm. Concentrations mentioned above are in a liquid composition containing the biocide combinations. Biocide concentrations in a high-sulfide and high-temperature environment typically will be higher than in other environments.

The present invention also encompasses a method for reducing, or inhibiting, or preventing microbial growth in the use areas described above, especially in oil or natural gas production operations, by incorporating the claimed biocide combination into the materials.

EXAMPLES

The synergism of the biocides combination of the present invention was determined using the method described by Kull, F.C, et al. in Applied Microbiology 9:538-541 (1961).

The formula to calculate the synergistic index (SI) is

$$Qa/QA + Qb/QB = SI$$

Where

> QA= concentration of compound A in ppm, acting alone produced an end point
> Qa = concentration of compound A in ppm, in the mixture, which produced an end point
> QB= concentration of compound B in ppm, acting alone produced an end point
> Qb= concentration of compound B in ppm, in the mixture, which produced an end point

In this study, biocide end point is defined as exhibiting at least 4-log bacterial reduction or maintaining a maximum 2 log bacterial count at the specified contact time. If end point could not be established, the highest concentration of biocide tested will be used as the end point for the calculation and the SI will be recorded in "less than or <" values.

Synergism within two biocides is demonstrated when the SI has a value less than 1. The mixtures showed an additive effect if SI is equal to 1 and antagonistic if SI is greater than 1.

Experimental Methods

Tris(hydroxymethyl)nitromethane (THNM), CAS No. 126-11-4, is available commercially under the designation Aqucar TH 50 from The Dow Chemical Company. Quaternary ammonium compounds tested for biocidal efficacy alone and in combination with THNM included: N-alkyl (50% C14, 40% C12, 10% C16) dimethylbenzyl ammonium chloride (ADBAC), CAS No. 68424-85-1, available commercially under the designation Maquat MC1412; N-alkyl (50% C14, 40% C12, 10% C16) dimethylbenzyl ammonium chloride (ADBAC), CAS No. 68424-85-1, available commercially under the designation Barquat MB-80; Didecyl ammonium chloride (DDAC), CAS No. 7173-51-5, available commercially under the designation Maquat 4450-E; Benzalkonium chloride (benzyl-C8-18-alkyldimethyl, chlorides) (BKC), CAS No. 63449-41-2, available commercially from Fluka; and Poly (oxyethylene (dimethyliminio) ethylene (dimethyliminio) ethylene dichloride) (Polixetonium chloride) (CAS No. 31512-74-0), available commercially under the designation Polyquat 60.

The type of microorganisms used for the test inoculums, the matrix to support optimum microbial growth during the test period and the medium used to enumerate the microorganisms after specified contact time are summarized in Table 1.

Table 1

| Physiological Type of Bacteria | Initial Total Population Size of Bacteria in Test Suspension | Matrix | Enumeration medium |
|---|---|---|---|
| **Aerobic/Facultatively anaerobic** | | | |
| *Klebsiella pneumoniae* (*K. pneumoniae*) (ATCC 8308) | ~$4 \times 10^6$ (~$1 \times 10^6$ of each species) | Minimal Salts Medium (MSM) with nutrients[1] | Tryptic Soy Broth + resazurin |
| *Bacillus subtilis* (*B. subtilis*) (ATCC 8473) | | | |
| *Pseudomonas aeruginosa* (*P. aeruginosa*) (ATCC 15442) | | | |
| *Staphylococcus aureus* (*S. aureus*) ATCC 6538) | | | |
| **Anaerobic** | | | |
| Field isolated, acid-producing bacteria | ~$1 \times 10^7$ | MSM (no nutrients)[2] | Phenol Red Dextrose (PRD) |
| *Desulfovibrio longus* (*D. longus*) (SRB) | ~$1 \times 10^7$ | SNF[3] | MB[4] with 0.1% ferrous ammonium sulfate hexahydrate |

[1] Mineral salts medium (MSM) with nutrients. The medium contains (in mg/l) the following components: $FeCl_3.6H_2O$ (1); $CaCl_2.2H_2O$ (10); $MgSO_4.7H_2O$ (22.5); $(NH_4)_2SO_4$ (40); $KH_2PO_4$ (10); $K_2HPO_4$ (25.5); Yeast Extract (10); and glucose (100). After all components are added to deionized water, the pH of the medium is adjusted to 7.5 before use.
[2] Mineral salts medium (MSM No Nutrients). The medium contains (in mg/l) the following components: $FeCl_3.6H_2O$ (1); $CaCl_2.2H_2O$ (10); $MgSO_4.7H_2O$ (22.5); $(NH_4)_2SO_4$ (40); $KH_2PO_4$ (10); and $K_2HPO_4$ (25.5). After all components are added to deionized water, the pH of the medium is adjusted to 7.5 before use.
[3] SNF (per liter of deionized water): NaCl, 3.12 gm; $NaHCO_3$ 0.131 gm; $Na_2SO_4$ 0.17 gm; 1% KCl Solution (in water) 4.77 g; 1% CaCl2 Solution (in water) 7.2 gm; 1% $MgSO_4$ Solution (in water) 5.45 gm; 1% $Na_2CO_3$ Solution (in water) 4.39 gm. Adjust the pH to 7 before use.
[4] Modified Baar's medium (MB): $MgSO_4$, 2 g/l; sodium citrate, 5 g/l; $CaSO_4$, 1 g/l; $NH_4Cl$, 1 g/l; $K_2HPO_4$, 0.5 g/l; sodium lactate, 3.5 g/l; yeast extract, 1 g/l; Sodium thioglycolate 0.g/l. $Fe(NH_4)_2(SO_4)_2$ 1 g/l, deionized water. Adjust the pH to 7.5 before sodium thioglycolate is added.

Synergy tests of THNM alone and in combination with a second biocide against the different test microorganisms were conducted using standard 96 well microtiter plate assays. The test was carried out by adding 500uL of matrix, 50$\mu$l of tested organism and 50 $\mu$l of each biocide into wells of the microtiter plate. The final biocides and test inoculum concentrations in each well were established based on this total volume. For each experiment, the final concentration of the test organisms was in the range of $10^6$ to $10^7$ cfu/ml. The highest concentration of THNM and second biocide used in this synergy study was 250 and 100 or 50 ppm (depending on the efficacy of the active), respectively. Eight 2-fold dilutions of each biocide were prepared using an automated liquid handling system. The first biocide was added into the well plate horizontally and the second biocide is added after rotating the plate 90 degrees. Columns nine and ten were reserved for each individual biocide to be tested at each concentration level to achieve at least 4-log bacterial kill or 2-log bacterial count (defined as end point) for synergy index calculation. In case the end point was not achieved, the highest biocide concentration tested was used for synergy index calculation. Wells in Column 11 were used as positive controls; they contained only the media and the test organism. The plates were incubated at 25°C for aerobic bacteria and 32°C for anaerobic bacteria. Enumeration was performed 24 hours contact time by employing the MPN method. Numbers of surviving bacteria were determined by removing 20uL of the cell suspension from each well and adding it into 180 ul of enumeration media (i.e., resazurin TSB plates) then serially dilute in a 96-well block. Plates were incubated for 48 hours or until growth is observed in the control wells.

The results of two biocides exhibiting synergy against aerobic bacteria are presented in Tables 2-5.

| Table 2. Synergistic composition of THNM and ADBAC against *aerobic bacteria* | | | | | |
|---|---|---|---|---|---|
| Aqucar TN-50 (ppm THNM) - Qa | Maquat MC1412 (ppm ADBAC) - Qb | Aqucar TN-50 (ppm THNM) - QA | Maquat MC1412 (ppm ADBAC) - QB | SI = Qa/QA + Qb/QB | Ratio (THNM: ADBAC) |
| | | > 250 | > 50 | | |
| 125.00 | 25.00 | | | < 1 | 5:1 |
| 62.50 | 25.00 | | | < 0.75 | 2.5:1 |
| 31.25 | 25.00 | | | < 0.63 | 1.25:1 |
| 15.63 | 25.00 | | | < 0.56 | 1:1.6 |
| Synergistic ratio range: THNM:ADBAC: 5:1 to 1:1.6 | | | | | |

| Table 3. Synergistic composition of THNM and BKC against *Aerobic bacteria* | | | | | |
|---|---|---|---|---|---|
| Aqucar TN-50 (ppm THNM) - Qa | BKC (ppm BKC) - Qb | Aqucar TN-50 (ppm THNM) - QA | Benzalkonium Chloride (ppm BKC) - QB | SI = Qa/QA + Qb/QB | Ratio (THNM: BKC) |
| | | > 250 | > 50 | | |
| 125.00 | 25.00 | | | < 1 | 5:1 |
| 62.50 | 25.00 | | | < 0.75 | 2.5:1 |
| 31.25 | 25.00 | | | < 0.63 | 1.25:1 |
| 15.63 | 25.00 | | | < 0.56 | 1:1.6 |
| 7.81 | 25.00 | | | < 0.53 | 1:3.2 |
| 3.91 | 25.00 | | | < 0.52 | 1:6.41 |
| 1.95 | 25.00 | | | < 0.51 | 1:12.8 |
| 125.00 | 12.50 | | | < 0.75 | 10:1 |
| 62.50 | 12.50 | | | < 0.50 | 5:1 |
| 31.25 | 12.50 | | | < 0.38 | 2.5:1 |
| 15.63 | 12.50 | | | < 0.31 | 1.25:1 |
| 7.81 | 12.50 | | | < 0.28 | 1:1.6 |
| 3.91 | 12.50 | | | < 0.27 | 1:3.2 |
| 1.95 | 12.50 | | | < 0.26 | 1:6.41 |
| Synergistic ratio THNM:BKC: 10:1 to 1:13 | | | | | |

| Table 4. Synergistic composition of THNM and DDAC against *Aerobic bacteria* | | | | | |
|---|---|---|---|---|---|
| Aqucar TN-50 (ppm THNM) - Qa | Maquat 4450-E (ppm DDAC) - Qb | Aqucar TN-50 (ppm THNM) -QA | Maquat 4450-E (ppm DDAC) - QB | SI = Qa/QA + Qb/QB | Ratio (THNM: DDAC) |
| | | > 250 | > 50 | | |
| 125.00 | 25.00 | | | < 1 | 5:1 |
| 62.50 | 25.00 | | | < 0.75 | 2.5:1 |
| 31.25 | 25.00 | | | < 0.63 | 1.25:1 |
| 15.63 | 25.00 | | | < 0.56 | 1:1.6 |
| 7.81 | 25.00 | | | < 0.53 | 1:3.2 |
| 3.91 | 25.00 | | | < 0.52 | 1:6.41 |
| 1.95 | 25.00 | | | < 0.51 | 1:12.80 |
| 125.00 | 12.50 | | | < 0.75 | 10:1 |
| 62.50 | 12.50 | | | < 0.50 | 5:1 |
| 31.25 | 12.50 | | | < 0.38 | 2.5:1 |
| 15.63 | 12.50 | | | < 0.31 | 1.25:1 |
| 7.81 | 12.50 | | | < 0.28 | 1:1.6 |
| 3.91 | 12.50 | | | < 0.27 | 1:3.2 |
| 1.95 | 12.50 | | | < 0.26 | 1:6.41 |
| Synergistic ratio THNM:DDAC: 10:1 to 1:13 | | | | | |

| Table 5. Synergistic composition of THNM and Polixetonium chloride against *D. longus* | | | | | |
|---|---|---|---|---|---|
| Aqucar TN-50 (ppm THNM) - Qa | Polyquat 60 (ppm Polixetonium chloride) - Qb | Aqucar TN-50 (ppm THNM) - QA | Polyquat 60 (ppm Polixetonium chloride) - QB | SI = Qa/QA + Qb/QB | Ratio (THNM: Polixetonium chloride) |
| | | >250 | > 50 | | |
| 125.00 | 25.00 | | | < 1 | 5:1 |
| 62.50 | 25.00 | | | < 0.75 | 2.5:1 |
| 31.25 | 25.00 | | | < 0.63 | 1.25:1 |
| 15.63 | 25.00 | | | < 0.56 | 1:1.6 |
| 7.81 | 25.00 | | | < 0.53 | 1:3.2 |
| 3.91 | 25.00 | | | < 0.52 | 1:6.41 |
| 1.95 | 25.00 | | | < 0.51 | 1:12.80 |
| 125.00 | 12.50 | | | < 0.75 | 10:1 |
| 62.50 | 12.50 | | | < 0.50 | 5:1 |
| 31.25 | 12.50 | | | < 0.38 | 2.5:1 |
| 15.63 | 12.50 | | | < 0.31 | 1.25:1 |
| 7.81 | 12.50 | | | < 0.28 | 1:1.6 |
| 3.91 | 12.50 | | | < 0.27 | 1:3.2 |
| 1.95 | 12.50 | | | < 0.26 | 1:6.41 |

(continued)

| Table 5. Synergistic composition of THNM and Polixetonium chloride against *D. longus* | | | | | |
|---|---|---|---|---|---|
| Aqucar TN-50 (ppm THNM) - Qa | Polyquat 60 (ppm Polixetonium chloride) - Qb | Aqucar TN-50 (ppm THNM) - QA | Polyquat 60 (ppm Polixetonium chloride) - QB | SI = Qa/QA + Qb/QB | Ratio (THNM: Polixetonium chloride) |
| 125.00 | 6.25 | | | < 0.63 | 20:1 |
| 62.50 | 6.25 | | | < 0.38 | 10:1 |
| 31.25 | 6.25 | | | < 0.25 | 5:1 |
| 15.63 | 6.25 | | | < 0.19 | 2.5:1 |
| 7.81 | 6.25 | | | < 0.16 | 1.25:1 |
| 3.91 | 6.25 | | | < 0.14 | 1:1.6 |
| 1.95 | 6.25 | | | < 0.13 | 1:3.2 |
| 125.00 | 3.13 | | | < 0.56 | 40:1 |
| 62.50 | 3.13 | | | < 0.31 | 20:1 |
| 31.25 | 3.13 | | | < 0.19 | 10:1 |
| 15.63 | 3.13 | | | < 0.13 | 5:1 |
| 7.81 | 3.13 | | | < 0.09 | 2.5:1 |
| 3.91 | 3.13 | | | < 0.08 | 1.25:1 |
| 1.95 | 3.13 | | | < 0.07 | 1:1.6 |
| Synergistic ratio range THNM:polyquat: 40:1 to 1:13 | | | | | |

The results of two biocides exhibiting synergy against anaerobic sulfate reducing bacteria are presented in Tables 6-9.

| Table 6. Synergistic composition of THNM and ADBAC against *D. longus* | | | | | |
|---|---|---|---|---|---|
| Aqucar TN-50 (ppm THNM) - Qa | Maquat MC1412 (ppm ADBAC) - Qb | Aqucar TN-50 (ppm THNM) - QA | Maquat MC1412 (ppm ADBAC) - QB | SI = Qa/QA + Qb/QB | Ratio (THNM: ADBAC) |
| | | 250.00 | 6.25 | | |
| 62.50 | 3.13 | | | 0.75 | 20:1 |
| 31.25 | 3.13 | | | 0.63 | 10:1 |
| 15.63 | 3.13 | | | 0.56 | 5:1 |
| 7.81 | 3.13 | | | 0.53 | 2.5:1 |
| 3.91 | 3.13 | | | 0.52 | 1.25:1 |
| 1.95 | 3.13 | | | 0.51 | 1:1.6 |
| 125.00 | 1.56 | | | 0.75 | 80:1 |
| 62.50 | 1.56 | | | 0.50 | 40:1 |
| Synergistic ratio range THNM:ADBAC: 80:1 to 1:1.6 | | | | | |

| Table 7. Synergistic composition of THNM and BKC against *D. longus* | | | | | |
|---|---|---|---|---|---|
| Aqucar TN-50 (ppm THNM) - Qa | BKC (ppm BKC) - Qb | Aqucar TN-50 (ppm THNM) - QA | BKC (ppm BKC) - QB | SI = Qa/QA + Qb/QB | Ratio (THNM: BKC) |
| | | 250.00 | 3.13 | | |
| 62.50 | 1.56 | | | 0.75 | 40:1 |
| 31.25 | 1.56 | | | 0.63 | 20:1 |
| 15.63 | 1.56 | | | 0.56 | 10:1 |
| 7.81 | 1.56 | | | 0.53 | 5:1 |
| 3.91 | 1.56 | | | 0.52 | 2.5:1 |
| 1.95 | 1.56 | | | 0.51 | 1.25:1 |
| 125.00 | 0.78 | | | 0.75 | 160:1 |
| Synergistic ratio of THNM: BKC: 160:1 to 1.25:1 | | | | | |

| Table 8. Synergistic composition of THNM and DDAC against *D. longus* | | | | | |
|---|---|---|---|---|---|
| Aqucar TN-50 (ppm THNM) - Qa | Maquat 4450-E (ppm DDAC) - Qb | Aqucar TN-50 (ppm THNM) - QA | Maquat 4450-E (ppm DDAC) - QB | SI = Qa/QA + Qb/QB | Ratio (THNM: DDAC) |
| | | 250.00 | 6.25 | | |
| 62.50 | 3.13 | | | 0.75 | 20:1 |
| 31.25 | 3.13 | | | 0.63 | 10:1 |
| 15.63 | 3.13 | | | 0.56 | 5:1 |
| 7.81 | 3.13 | | | 0.53 | 2.5:1 |
| 3.91 | 3.13 | | | 0.52 | 1.25:1 |
| 1.95 | 3.13 | | | 0.51 | 1:1.6 |
| 125.00 | 1.56 | | | 0.75 | 80:1 |
| 62.50 | 1.56 | | | 0.50 | 40:1 |
| Synergistic ratio range of THNM: DDAC: 80:1 to 1:1.6 | | | | | |

| Table 9. Synergistic composition of THNM and Polixetonium chloride against *D. longus* | | | | | |
|---|---|---|---|---|---|
| Aqucar TN-50 (ppm THNM) - Qa | Polyquat 60 (ppm Polixetonium chloride) - Qb | Aqucar TN-50 (ppm THNM) - QA | Polyquat 60 (ppm Polixetonium chloride) - QB | SI = Qa/QA + Qb/QB | Ratio (THNM: Polixetonium chloride) |
| | | 250.00 | 6.25 | | |
| 62.50 | 3.13 | | | 0.75 | 20:1 |
| 31.25 | 3.13 | | | 0.63 | 10:1 |
| 15.63 | 3.13 | | | 0.56 | 5:1 |
| 7.81 | 3.13 | | | 0.53 | 2.5:1 |
| 3.91 | 3.13 | | | 0.52 | 1.25:1 |
| 1.95 | 3.13 | | | 0.51 | 1:1.6 |

(continued)

| Table 9. Synergistic composition of THNM and Polixetonium chloride against *D. longus* | | | | | |
|---|---|---|---|---|---|
| Aqucar TN-50 (ppm THNM) - Qa | Polyquat 60 (ppm Polixetonium chloride) - Qb | Aqucar TN-50 (ppm THNM) - QA | Polyquat 60 (ppm Polixetonium chloride) - QB | SI = Qa/QA + Qb/QB | Ratio (THNM: Polixetonium chloride) |
| 125.00 | 1.56 | | | 0.75 | 80:1 |
| 62.50 | 1.56 | | | 0.50 | 40:1 |
| Synergistic ratio range of THNM:Polyquat: 80:1 to 1:1.6 | | | | | |

The results of two biocides exhibiting synergy against anaerobic acid producing bacteria are presented in Tables 10-13.

| Table 10. Synergistic composition of THNM and ADBAC against *Environmental isolate APB* | | | | | |
|---|---|---|---|---|---|
| Aqucar TN-50 (ppm THNM) - Qa | Maquat MC1412 (ppm ADBAC) - Qb | Aqucar TN-50 (ppm THNM) - QA | Maquat MC1412 (ppm ADBAC) - QB | SI = Qa/QA + Qb/QB | Ratio (THNM: ADBAC) |
| | | > 250 | 12.5 | | |
| 125.00 | 6.25 | | | < 1 | 20:1 |
| 62.50 | 6.25 | | | < 0.75 | 10:1 |
| 31.25 | 6.25 | | | < 0.63 | 5:1 |
| 15.63 | 6.25 | | | < 0.56 | 2.5:1 |
| 7.81 | 6.25 | | | | 1.25:1 |
| 3.91 | 6.25 | | | < 0.52 | 1:1.6 |
| Synergistic ratio range of THNM:ADBAC is 20:1 to 1:1.6. | | | | | |

| Table 11. Synergistic composition of THNM and BKC against *Environmental isolate APB* | | | | | |
|---|---|---|---|---|---|
| Aqucar TN-50 (ppm THNM) - Qa | BKC (ppm BKC) - Qb | Aqucar TN-50 (ppm THNM) - QA | BKC (ppm BKC) - QB | SI = Qa/QA + Qb/QB | Ratio (THNM: BKC) |
| | | > 250 | 12.50 | | |
| 125.00 | 6.25 | | | < 1 | 20:1 |
| 62.50 | 6.25 | | | < 0.75 | 10:1 |
| 31.25 | 6.25 | | | < 0.63 | 5:1 |
| 15.63 | 6.25 | | | < 0.56 | 2.5:1 |
| 7.81 | 6.25 | | | | 1.25:1 |
| 3.91 | 6.25 | | | < 0.52 | 1:1.6 |
| 1.95 | 6.25 | | | < 0.51 | 1:3.2 |
| Synergistic ratio range of THNM:BKC is 20:1 to 1:3.2. | | | | | |

| Table 12. Synergistic composition of THNM and DDAC against *Environmental isolate APB* | | | | | |
|---|---|---|---|---|---|
| Aqucar TN-50 (ppm THNM) - Qa | Maquat 4450-E (ppm DDAC) - Qb | Aqucar TN-50 (ppm THNM) - QA | Maquat 4450-E (ppm DDAC) - QB | SI = Qa/QA + Qb/QB | Ratio (THNM: DDAC) |
| | | > 250 | 12.50 | | |
| 125.00 | 6.25 | | | < 1 | 20:1 |
| 62.50 | 6.25 | | | < 0.75 | 10:1 |
| 31.25 | 6.25 | | | < 0.63 | 5:1 |
| 15.63 | 6.25 | | | < 0.56 | 2.5:1 |
| 7.81 | 6.25 | | | | 1.25:1 |
| 3.91 | 6.25 | | | < 0.52 | 1:1.6 |
| 1.95 | 6.25 | | | < 0.51 | 1:3.2 |
| 125.00 | 3.13 | | | < 0.75 | 40:1 |
| 62.50 | 3.13 | | | < 0.5 | 20:1 |
| 31.25 | 3.13 | | | < 0.38 | 10:1 |
| 15.63 | 3.13 | | | < 0.31 | 5:1 |
| 7.81 | 3.13 | | | < 0.28 | 2.5:1 |
| 3.91 | 3.13 | | | < 0.27 | 1.25:1 |
| 1.95 | 3.13 | | | < 0.26 | 1:1.6 |
| Synergistic ratio of THNM:DDAC is 40:1 to 1:3.2. | | | | | |

| Table 13. Synergistic composition of THNM and Polyquat against *Environmental isolate APB* | | | | | |
|---|---|---|---|---|---|
| Aqucar TN-50 (ppm THNM) - Qa | Polyquat 60 (ppm Polixetonium chloride) - Qb | Aqucar TN-50 (ppm THNM) - QA | Polyquat 60 (ppm Polixetonium chloride) - QB | SI = Qa/QA + Qb/QB | Ratio (THNM: Polixetonium chloride) |
| | | > 250 | > 50 | | |
| 250.00 | 50.00 | | | < 2 | 5:1 |
| 125.00 | 50.00 | | | < 1.5 | 2.5:1 |
| 250.00 | 12.50 | | | < 1.25 | 20:1 |
| Synergistic ratio range of THNM:Polyquat is 20:1 to 2.5:1 | | | | | |

**Claims**

1. An antimicrobial composition comprising: (a) tris(hydroxymethyl)nitromethane (THNM); and (b) a quaternary ammonium compound (QAC);
   wherein the QAC is selected from the group consisting of N-alkyl (50% C14, 40% C12, 10% C16) dimethylbenzyl ammonium chloride, didecyl dimethyl ammonium chloride, benzalkonium chloride or polixetonium chloride;
   and wherein
   when the QAC is N-alkyl (50% C14, 40% C12, 10% C16) dimethylbenzyl ammonium chloride, the weight ratio of THNM:QAC is from 80:1 to 1:1.6;
   when the QAC is didecyl dimethyl ammonium chloride, the weight ratio of THNM:QAC is from 80:1 to 1:13;
   when the QAC is benzalkonium chloride, the weight ratio of THNM:QAC is from 160:1 to 1:13;
   when the QAC is polixetonium chloride, the weight ratio of THNM:QAC is from 80:1 to 1:13.

**EP 3 174 396 B1**

2. A non-therapeutical method for inhibiting microbial growth in a medium, the method comprising adding to a medium the composition of claim 1.

3. The method of claim 2 in which the medium is anaerobic.

4. The method of claim 3 in which the medium contains sulfate-reducing microorganisms.

5. The method of claim 3 in which the medium contains acid-producing microorganisms.

6. The method of claim 2 in which the medium is aerobic.


**Patentansprüche**

1. Antimikrobielle Zusammensetzung, umfassend: (a) Tris(hydroxymethyl)nitromethan (THNM) und (b) eine quaternäre Ammoniumverbindung (QAC);
   wobei das QAC ausgewählt ist aus der Gruppe bestehend aus N-Alkyl (50% C14, 40% C12, 10% C16) Dimethylbenzyl-ammoniumchlorid, Didecyldimethyl-ammoniumchlorid, Benzalkoniumchlorid oder Polixetoniumchlorid;
   und wobei,
   wenn das QAC N-Alkyl (50% C14, 40% C12, 10% C16) Dimethylbenzyl-ammoniumchlorid ist, das Gewichtsverhältnis von THNM:QAC von 80:1 bis 1:1,6 beträgt;
   wenn das QAC Didecyldimethyl-ammoniumchlorid ist, das Gewichtsverhältnis von THNM : QAC von 80:1 bis 1:1,13 beträgt;
   wenn das QAC Benzalkoniumchlorid ist, das Gewichtsverhältnis von THNM:QAC von 160:1 bis 1:1,13 beträgt;
   wenn das QAC Polixetoniumchlorid ist, das Gewichtsverhältnis von THNM QAC von 80:1 bis 1:1,13 beträgt.

2. Nichttherapeutisches Verfahren zur Hemmung des mikrobiellen Wachstums in einem Medium, wobei das Verfahren Zugeben der Zusammensetzung nach Anspruch 1 zu einem Medium umfasst.

3. Verfahren nach Anspruch 2, wobei das Medium anaerob ist.

4. Verfahren nach Anspruch 3, wobei das Medium sulfatreduzierende Mikroorganismen enthält.

5. Verfahren nach Anspruch 3, wobei das Medium säureproduzierende Mikroorganismen enthält.

6. Verfahren nach Anspruch 2, wobei das Medium aerob ist.


**Revendications**

1. Composition antimicrobienne comprenant: (a) du tris(hydroxyméthyl)nitrométhane (THNM); et (b) un composé d'ammonium quaternaire (QAC);
   dans laquelle le QAC est choisi dans le groupe constitué par un chlorure de N-alkyl (50% C14, 40% C12, 10% C16) diméthylbenzyl ammonium, un chlorure de didécyl diméthyl ammonium, un chlorure de benzalkonium ou un chlorure de polyxétonium;
   et dans laquelle
   lorsque le QAC est un chlorure de N-alkyl (50% C14, 40% C12, 10% C16) diméthylbenzyl ammonium, le rapport pondéral de THNM:QAC est de 80:1 à 1:1,6;
   lorsque le QAC est un chlorure de didécyl diméthyl ammonium, le rapport pondéral de THNM:QAC est de 80:1 à 1:13;
   lorsque le QAC est un chlorure de benzalkonium, le rapport pondéral de THNM:QAC est de 160:1 à 1:13;
   lorsque le QAC est un chlorure de polyxétonium, le rapport pondéral de THNM:QAC est de 80:1 à 1:13.

2. Procédé non thérapeutique pour inhiber une croissance microbienne dans un milieu, le procédé comprenant l'addition à un milieu de la composition selon la revendication 1.

3. Procédé selon la revendication 2, dans lequel le milieu est anaérobie.

4. Procédé selon la revendication 3, dans lequel le milieu contient des micro-organismes sulfatoréducteurs.

**5.** Procédé selon la revendication 3, dans lequel le milieu contient des micro-organismes producteurs d'acide.

**6.** Procédé selon la revendication 2, dans lequel le milieu est aérobie.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5385896 A
- JP 2004123617 A

**Non-patent literature cited in the description**

- **KULL, F.C et al.** *Applied Microbiology,* 1961, vol. 9, 538-541
- *CHEMICAL ABSTRACTS,* 126-11-4
- *CHEMICAL ABSTRACTS,* 68424-85-1
- *CHEMICAL ABSTRACTS,* 7173-51-5
- *CHEMICAL ABSTRACTS,* 63449-41-2
- *CHEMICAL ABSTRACTS,* 31512-74-0